Europäisches Patentamt

European Patent Office

Office européen des brevets

(11) Veröffentlichungsnummer: **0 266 676**
**A2**

(12) **EUROPÄISCHE PATENTANMELDUNG**

(21) Anmeldenummer: 87115894.5

(22) Anmeldetag: 29.10.87

(51) Int. Cl.⁴: **C09B 67/20** , C09D 17/00 , C08J 3/20

(30) Priorität: 06.11.86 DE 3637770

(43) Veröffentlichungstag der Anmeldung:
11.05.88 Patentblatt 88/19

(84) Benannte Vertragsstaaten:
CH DE ES FR IT LI SE

(71) Anmelder: Henkel Kommanditgesellschaft auf
Aktien
Postfach 1100 Henkelstrasse 67
D-4000 Düsseldorf-Holthausen(DE)

(72) Erfinder: Harth, Hubert, Dr.
Buchenstrasse 31
D-4000 Düsseldorf(DE)
Erfinder: Bartnik, Bernhard
Wiener-Neustädter Strasse 26
D-4019 Monheim(DE)
Erfinder: Eckelt, Michael
Urdenbacher Dorfstrasse 56
D-4000 Düsseldorf(DE)

(54) Staubfreie Farbpigmentzusammensetzungen für Kunststoffe und Verfahren zu deren Herstellung.

(57) Staubfreie Farbpigmentzusammensetzungen für
das Färben von Kunststoffen enthalten einen oder
mehrere feste Farbstoffe oder Pigmente und ein
oder mehrere bei 25°C feste Kunststoff-Verarbeitungshilfsmittel, vorzugsweise Gleitmittel, die einen
Schmelzpunkt unter dem Zersetzungspunkt der
Farbstoffe oder Pigmente aufweisen und sowohl mit
den Farbstoffen und/oder Pigmenten als auch mit
den Kunststoffen verträglich sind, und liegen in Form
von Pastillen vor.

EP 0 266 676 A2

## Staubfreie Farbpigmentzusammensetzungen für Kunststoffe und Verfahren zu deren Herstellung

Die Erfindung betrifft staubfreie Pigmentzusammensetzungen für das Einfärben von Kunststoffen sowie ein Verfahren zu deren Herstellung. ·

Es ist seit langer Zeit bekannt, Kunststoffe je nach den Erfordernissen bzw. Bedürfnissen einzufärben. Zum Einfärben der Polymeren werden nach dem Stand der Technik geeignete Farbpigmente verwendet. Dabei werden den Polymerrohmassen geeignete Farbpigmente in Pulverform in geeigneten Konzentrationen zugemischt und dadurch eine mehr oder weniger starke Färbung der Polymermasse erreicht. Beispiele für aus gefärbten Kunststoffen hergestellte Artikel sind Rohre für Versorgungsleitungen (Wasserleitungen, Gasleitungen etc.) sowie Rohrfittings, Kunststoffcontainer für unterschiedliche Zwecke, Deckel, Kästen usw.

Die nach dem Stand der Technik bekannten Farbpigmentzusammensetzungen in Pulverform haben den Nachteil, daß die nur einen Durchmesser von wenigen μm aufweisenden Pigmentpartikel in der Umgebung der Mischer einen feinen Schwebestaub bilden, der nicht nur in der unmittelbaren Umgebung der Arbeitsgerätschaften stört, sondern auch mit der Umgebungsluft fortgetragen wird und dadurch anderweitig zu Staubbelästigungen führen kann. Zudem lassen sich die leeren Verpackungen von derartigen Farbpigmenten mit Feinstkornanteilen nur sehr schlecht handhaben. Es mußte deswegen immer darauf geachtet werden, daß die Transportwege sowohl für die Farbpigmente selbst als auch für die entleerten Verpackungen gegen das Entweichen von Staub hermetisch zu schützen waren. Nur dadurch ließ sich ein größtmöglicher Schutz der mit der Pigmentzuführung beschäftigten Arbeitskräfte in der Umgebung der Mischapparaturen vor Farbpigmentstaub ermöglichen.

Zudem werden mitunter auch im freien Zustand toxische Farbpigmente in Kunststoffe oder Kunststoffmischungen eingearbeitet, so daß bei der Verarbeitung derartiger Pigmente immer eine gewisse Gefahr von Vergiftungen bei Kontamination mit dem feinen Pigmentstaub besteht. Es war daher ein lange Zeit unerfülltes Bedürfnis, die Staubbildung bei der Verarbeitung von Farbpigmenten in der Kunststoffindustrie auf ein Minimum zu reduzieren oder, wenn möglich, ganz zu vermeiden.

Zur Lösung dieses Problems sind in der DE-PS 30 21 577 feste Farbpigmentzusammensetzungen vorgeschlagen worden, die 40 bis 75 Gewichtsprozent Farbpigment und 25 bis 60 Gewichtsprozent Glycerinmonostearat enthalten und dadurch erhalten werden, daß man die jeweiligen Pigmente in den geschmolzenen Ester einrührt und die dabei entstehende Mischung in Formen zu Blöcken erstarren läßt. In analoger Weise können nach DE-PS 30 22 182 feste Pigmentzusammensetzungen durch Ein rühren der Pigmente in einen geschmolzenen Ester aus einer aromatischen Dicarbonsäure und einem Alkohol mit 10 bis 22 Kohlenstoffatomen und nachfolgendem Erstarrenlassen erhalten werden. Auf beiden Wegen entstehen Zusammensetzungen mit einem definierten Gehalt an Pigment und einem Ester, der vorteilhafterweise ein Schmier-oder Gleitmittel, also ein für die Kunststoffverarbeitung geeignetes Hilfsmittel, · darstellt.

Nachteilig an diesen Vorschlägen ist jedoch, daß zur Einmischung in die zu verarbeitenden Kunststoffgranulate, beispielsweise PVC-Granulate, die in Blöcken erstarrten Mischungen wieder zerkleinert, d.h. vermahlen werden müssen. Damit fällt unvermeidbar wieder ein Feinstkornanteil der Mischung an, der auch wieder zur Bildung von Staub führt. Die bei der Vermahlung erhaltenen Granulate können daher nicht als staubfrei angesehen werden. Die den genannten deutschen Offenlegungsschriften zugrundeliegende Aufgabe, staubfreie Farbpigmentzusammensetzungen für die PVC-Verarbeitung zu schaffen, wurde somit nicht gelöst.

Gegenstand der japanischen Patentanmeldung 41 275/74 (siehe Chem. Abstr. 81: 106 737h) ist ebenfalls die Herstellung von farbpigmenthaltigen Granulaten zur Einfärbung von thermoplastischen Kunststoffen. Das pulverförmige Farbpigment wird dabei mit einer inerten organischen Verbindung oder ihrem Metallsalz, beispielsweise mit Natriumstearat, innig vermischt, worauf die Mischung auf eine Temperatur oberhalb des Schmelzpunkts der organischen Verbindung erhitzt, anschließend abgekühlt und durch Granulation wieder zerkleinert wird. Auch im Zuge dieses Vorgehens ist die nachträgliche Staubbildung bei der Zerkleinerung der unter den Schmelzpunkt der organischen Verbindung abgekühlten Mischung nicht zu verhindern. Die gleiche Vorgehensweise wird auch in der japanischen Patentanmeldung 150 449/79 (siehe Chem. Abstr. 92: 130018x) vorgeschlagen, wobei auch hier die festen Pigment-Stearat-Mischungen nach Abkühlen pulverisiert werden und sich auch dabei ein Staubbildung nicht in vollem Umfange verhindern läßt.

Eine der wesentlichen Voraussetzungen für eine gute Vermischbarkeit der Farbpigmente mit den meist in Granulatform vorliegenden Kunststoffpartikeln, beispielsweise mit PVC-Granulat, besteht darin, daß auch die Farbpigmentzusammensetzungen in fester Form vorliegen. Um eine besonders gute Verteilung der Farbpigmente im Kunststoff-Rohprodukt zu erzielen, werden bevorzugt Partikel der Farbpigmentzusammensetzung verwendet, die eine annähernd gleiche Partikelform wie die Kunststoffpartikel aufweisen. Sicherzustellen ist jedoch in jedem Fall, daß die Form und Größe der Partikel der Farbpigmentzusammensetzung eine gleichmäßige Verteilung des Pigments im einzufärbenden Kunststoff nicht behindert.

Es wurde überraschenderweise gefunden, daß absolut staubfreie Farbpigmentzusammensetzungen hergestellt werden können, wenn man das Farbpigment in einen schon geschmolzenen Hilfsstoff für die Kunststoffverarbeitung, beispielsweise in ein geschmolzenes Gleitmittel, einrührt und dabei eine möglichst hohe Konzentration der Farbpigmente in dem Hilfsstoff anstrebt. Solche Farbpigmentzusammensetzungen sind in Kunststoffen wie Polyvinylchlorid hervorragend dispergierbar.

Die Erfindung betrifft Farbpigmentzusammensetzungen für das Färben von Kunststoffen auf der Basis von Mischungen von Farbstoffen und bei Raumtemperaturen festen, schmelzbaren Kunststoff-Verarbeitungshilfsmitteln, die dadurch gekennzeichnet sind, daß sie

(a) einen oder mehrere feste Farbstoffe oder Pigmente in einer Menge von bis zu 99 Gew.-%, bezogen auf das Gewicht der Gesamtmischung, und

(b) ein oder mehrere bei 25°C feste Kunststoff-Verarbeitungshilfsmittel, die einen Schmelzpunkt unter dem Zersetzungspunkt der Farbstoffe oder Pigmente aufweisen und sowohl mit den Farbstoffen und/oder Pigmenten als auch mit den Kunststoffen verträglich sind, enthalten und

(c) in Form von Pastillen mit einem Durchmesser von 1 bis 20 mm vorliegen.

Die Erfindung betrifft außerdem ein Verfahren zur Herstellung staubfreier Farbpigmentzusammensetzungen für das Färben von Kunststoffen auf der Basis von Mischungen von Farbstoffen und festen, schmelzbaren Kunststoff-Verarbeitungshilfsmitteln, das dadurch gekennzeichnet ist, daß man

(a) in die Schmelze eines oder mehrerer bei 25°C fester Kunststoff-Verarbeitungshilfsmittel, die einen Schmelzpunkt unter dem Zersetzungspunkt der Farbstoffe oder Pigmente aufweisen und sowohl mit den Farbstoffen und/oder Pigmenten als auch mit den Kunststoffen verträglich sind, bis zu 99 Gew.-%, bezogen auf das Gewicht der Gesamtmischung, einen oder mehrere feste Farbstoffe oder Pigmente einträgt,

(b) gegebenenfalls grobe feste Pigmentanteile in dem geschmolzenen Kunststoff-Verarbeitungshilfsmittel einem Naßmahlprozeß unterwirft,

(c) die entstandene einheitliche Suspension auf eine Temperatur unterhalb des Schmelzpunktes des Kunststoff-Verarbeitungshilfsmittels gekühlte Fläche tropft und

(d) die dabei entstandenen Pastillen von der gekühlten Fläche ablöst und anschließend lagert oder unmittelbar der Kunststoffverarbeitung zuführt.

Gemäß der vorliegenden Erfindung können sowohl anorganische Farbpigmente, die zur Kunststoffeinfärbung verwendet werden, in staubfreie Farbpigmentzusammensetzungen überführt werden, als auch für die Kunststofffärbung geeignete organische Farbstoffe. Zur Gruppe der anorganischen Farbpigmente zählen beispielsweise Titandioxid, Chromate unterschiedlicher Schwermetalle wie z.B. Bleichromat, Kadmiumsulfid-gelb, - schwarzes Eisenoxid, oder sogenanntes "Braunpigment", d.h. eine Mischung aus Eisenoxid und Chrom-gelb. Als organische Farbstoffe können in diesem Zusammenhang alle für die Kunststofffärbung geeigneten organischen Farbstoffe, wie beispielsweise Phthalocyaningrün oder Phthalocyaninblau etc., verwendet werden.

Die Menge an Farbstoffen bzw. Farbpigmenten kann dabei in weiten Grenzen variieren, solange die Forderung, daß formstabile Pastillen entstehen, erfüllt ist. Die Menge kann im Einzelfall bis zu 99 Gew.-%, bezogen auf das Gewicht der Gesamtmischung, betragen. Sie liegt jedoch bevorzugt im Bereich von 40 bis 85 Gew.-%. Für die erfindungsgemäßen, staubfreien Farbpigmentzusammensetzungen kann dabei ein einziger Farbstoff oder ein einziges Farbpigment verwendet werden. Es sind jedoch auch Mischungen von Farbstoffen oder Farbpigmenten miteinander bzw. der beiden Gruppen untereinander verwendbar.

An die als zweite Komponente der erfindungsgemäßen staubfreien Farbpigmentzusammensetzungen verwendete Komponente, das Kunststoff-Verarbeitungshilfsmittel, werden allgemein mehrere Anforderungen gestellt, die bei seiner Auswahl als Komponente zu beachten sind. So darf der Schmelzpunkt des jeweiligen Hilfsmittels nicht so niedrig sein, daß schon bei Raumtemperatur oder geringfügig erhöhter Temperatur eine Verfestigung nicht mehr möglich ist. Auf der anderen Seite können nur Kunststoff-Verarbeitungshilfsmittel verwendet werden, deren Schmelzpunkt unter dem Zersetzungspunkt des Farbstoffes bzw. Farbpigmentes liegt. Bevorzugt sollte der Schmelzpunkt dabei im Bereich zwischen 50 und 100°C liegen, um Verarbeitungstemperaturen zuzulassen, die auch im großtechnischen Bereich gut und ohne hohe Energiekosten eingehalten werden können.

Ein zusätzliches Erfordernis des Kunststoff-Verarbeitungshilfsmittel ist, daß es sowohl mit den Farbstoffen und/oder Pigmenten, mit denen es zu staubfreien Farbpigmentzusammensetzungen compoundiert wird, als auch mit den später zu verarbeitenden Kunststoffen verträglich ist. Es werden als solche Mittel bevorzugt diejenigen Substanzen verwendet, die auch bei der Kunststoffverarbeitung als erforderliche Hilfsmittel verwendet werden. Mit Vorteil werden solche Hilfsmittel verwendet, die nicht nur bei der Kunststoffverarbeitung nicht stören, sondern auf die Verarbeitung des Kunststoffs einen positiven Effekt ausüben. Als solche sind schmelzbare Stabilisatoren, bei Raumtemperatur feste Weichmacher und insbesondere Gleitmittel zu nennen. Hinsichtlich der Verträglichkeit mit dem Farbstoff bwz. Pigment ist zu fordern, daß das Hilfsmittel mit dem Pigment keine chemischen Reaktionen eingehen darf. So dürfen beispielsweise basische Pigmente nicht mit Hilfsmitteln compoundiert werden, deren saurer Charakter zu einer Reakion mit dem Pigment führen und beide Stoffe damit für die Kunststoffverarbeitung bzw. -einfärbung unbrauchbar machen würde.

Als feste, schmelzbare Komponente werden erfindungsgemäß bevorzugt Gleitmittel aus der aus Fettsäuren mit 8 bis 24 C-Atomen, Fettalkoholen mit 12 bis 24 C-Atomen, Estern aus Fettsäuren mit 8 bis 24 C-Atomen und Fettalkoholen mit 6 bis 24 C-Atomen, Estern aus Fettsäuren mit 8 bis 24 C-Atomen und mehrwertigen Alkoholen mit 4 bis 6 Hydroxylgruppen und Hydroxystearinsäureestern bestehenden Gruppe eingesetzt. Die genannten Verbindungen können sowohl einzeln als auch im Gemisch miteinander eingesetzt werden.

Als Fettsäure mit 8 bis 24 C-Atomen kommen sowohl native als auch synthetische geradkettige gesättigte Verbindungen dieser Substanzklasse in Betracht. Werden Fettsäuregemische eingesetzt, so können diese untergeordnete Mengen ungesättigter Fettsäuren enthalten, unter der Voraussetzung, daß der Schmelzpunkt solcher Gemische in jedem Fall oberhalb von 25 °C liegt. Beispiele für Fettsäuren, die als feste schmelzbare Komponente eingesetzt werden können sind Capryl-, Caprin-, Laurin-, Tridecan-, Myristin-, Pentadecan-, Pamitin-, Margarin-, Stearin-, Behen-und Lignocerinsäure. Auch Hydroxylgruppen enthaltende Fettsäuren, wie 12-Hydroxystearinsäure kommen hier in Betracht. Derartige Fettsäuren können aus natürlich vorkommenden Fetten und Ölen, beispielsweise über die Fettspaltung bei erhöhter Temperatur und erhöhtem Druck und anschließende Trennung der erhaltenen Fettsäuregemische, gegebenenfalls nach Hydrierung der vorhandenen Doppelbindungen, erhalten werden. Vorzugsweise werden hier technische Fettsäuren eingesetzt, die in der Regel Gemische verschiedener Fettsäuren eines bestimmten Kettenlängenbereichs mit einer Fettsäure als Hauptbestandteil darstellen. Bevorzugt werden hier Fettsäuren mit 12 bis 18 C-Atomen eingesetzt.

Bei den als schmelzbare Komponente in Betracht gezogenen Fettalkolen mit 12 bis 24 C-Atomen handelt es sich um geradkettige gesättigte Vertreter dieser Substanzklasse, die ohne Ausnahme einen Schmelzpunkt oberhalb von 25 °C besitzen. Entsprechende Fettalkohole können u.a. aus natürlich vorkommenden Fetten und Ölen über die Umesterung mit Methanol, anschließende katalytische Hydrierung der erhaltenen Methylester und fraktionierte Destillation erhalten werden. Daneben können auch synthetische Fettalkohole, wie sie beispielsweise über die Oxo-und Zieglersynthese erhalten werden, eingesetzt werden. Beispiele für solche Fettalkohole sind Lauryl-, Myristyl-, Cetyl-, Stearyl-und Behenylalkohol. Diese Verbindungen können einzeln und im Gemisch miteinander eingesetzt werden. Bevorzugt werden technische Fettalkohole eingesetzt, die normalerweise Gemische aus verschiedenen Fettalkoholen eines begrenzten Kettenlängenbereichs darstellen, in denen jeweils ein Fettalkohol als Hauptbestandteil vorhanden ist. Vorzugsweise werden hier Fettalkohole mit 12 bis 18 C-Atomen eingesetzt.

Die oben genannten Ester aus Fettsäuren mit 8 bis 24 C-Atomen und Fettalkoholen mit 6 bis 24 C-Atomen müssen wiederum der Bedingung genügen, daß ihr Schmelzpunkt oberhalb von 25 °C liegt. Als Ausgangsmaterial für die Herstellung solcher Fettalkohol-Fettsäureester kommen die oben bereits ausführlich beschriebenen Fettsäuren und Fettalkohole in Betracht, wobei in solchen Estern zusätzlich auch Fettalkohole mit 6 bis 11 C-Atomen also beispielsweise n-Hexanol, n-Octanol und n-Decanol, als Alkoholkomponente vorhanden sein können. Die genannten Ester können nach bekannten Methoden der organischen Synthese, beispielsweise durch Erhitzen stöchiometrischer Mengen Fettsäure und Fettalkohol auf 180 bis 250 °C, gegebenenfalls in Gegen wart eines geeigneten Veresterungskatalysators wie Zinnschliff und unter Schutzgas, und Abdestillieren des Reaktionswassers, erhalten werden. Beispiele für erfindungsgemäß einsetzbare Ester sind Stearylcaprylat, Stearylcaprinat, Cetyllaurat, Cetylmyristat, Cetylpalmitat, n-Hexylstearat, n-Octylstearat, Laurylstearat, Stearylstearat, Stearylbehenat, Behenyllaurat und Behenylbehenat. Dabei ist zu beachten, daß diese Ester normalerweise aus technischen Ausgangsmaterialien hergestellt werden, die ihrerseits Stoffgemische sind, so daß die entsprechenden Ester ebenfalls Stoffgemische darstellen.

Als Ausgangsmaterial für die Herstellung der oben genannten Ester aus Fettsäuren mit 8 bis 24 C-Atomen und Alkoholen mit 4 bis 6 Hydroxylgruppen eignen sich wiederum die oben bereits beschriebenen Fettsäuren. Als Alkoholkomponente kommen vor allem aliphatische Polyole mit 4 bis 12 C-Atomen in Betracht, beispielsweise Erythrit, Pentaerythrit, Dipentaerythrit, Ditrimethylolpropan, Diglycerin, Triglycerin, Tetraglycerin, Mannit und Sorbit in Betracht. Bei diesen Polyolestern kann es sich um Vollester handeln, in denen sämtliche Hydroxylgruppen des Polyols mit Fettsäure verestert sind. Es kommen aber auch Polyolpartialester in Betracht, die im Molekül eine oder mehrere freie Hydroxylgruppen aufweisen. Diese Fettsäurepolyolester können ebenfalls nach bekannten Verfahren der organischen Synthese durch Veresterung der Polyole mit stöchiometrischen oder unterstöchiometrischen Mengen freier Fettsäuren erhalten werden. Beispiele für solche Polyolfettsäureester sind die Stearinsäure-und Stearinsäure/Palmitinsäurevollester des Erythrits, Pentaerythrits und Diglycerins, die Dilaurate des Dipentaerythrits, Ditrimethylolpropans, Triglycerins, Mannits und Sorbits, die Distearate des Erythrits, Pentaerythrits, Dipentaerythrits und Tetraglycerins sowie die sogenannten Sesquiester des Pentaerythrits, Dipentaerythrits, Mannits und Sorbits, zu deren Herstellung man auf 1 Mol Polyol 1,5 Mol Fettsäure, insbesondere Palmitin-und/oder Stearinsäure, einsetzt. Die genannten Polyolfettsäurester stellen in der Regel, schon auf Grund der jeweils eingesetzten Ausgangsmaterialien, Stoffgemische dar. Selbstverständlich kommen auch hier nur Produkte in Betracht, deren Schmelzpunkt oberhalb von 25 °C liegt.

Eine besondere Gruppe von möglichen -schmelzbaren Komponenten im Rahmen der Erfindung stellen die Ester der Hydroxystearinsäure dar, da hier sowohl Verbindungen in Betracht kommen, in denen die Hydroxystearinsäuren über ihre Carboxylgruppe mit einem ein-oder mehrwertigen Alkohol verestert sind, als auch solche, in denen sie mit ihrer Hydroxylgruppe mit Fettsäuren verestert sind. Vorzugsweise handelt es sich hier- um Derivate der 12-Hydroxystearinsäure, die beispielsweise aus dem Fettsäureanteil des hydrierten Ricinusöls gewonnen werden kann. Zu den Derivaten der erstgenannten Art zählen 12-Hydroxystearinsäurester der weiter oben ausführlich beschriebenen Fettalkohole sowie 12-Hydroxystearinsäurevollester und -partialester mit Polyolen mit 2 bis 6 Hydroxylgruppen und 2 bis 12 C-Atomen, insbesondere solche, die sich von Ethylenglykol, 1,2-und 1,3-Propylenglykol, den isomeren Butylenglykolen, 1,12-Dodecandiol, Glycerin, Trimethylolpropan, Erythrit, Pentaerythrit, Ditrimethylolpropan, Dipentaerythrit, Diglycerin, Triglycerin, Tetraglycerin, Mannit und Sorbit ableiten. Beispiele für solche Ester sind die 12-Hydroxystearinsäurevollester des Ethylenglykols, 1,3-Propylenglykols, Erythrits und Pentaerythrits, die Di-12-Hydroxystearate des Pentaerythrits, Dipentaerythrits, Diglycerins, Tetraglycerins und Sor bits sowie die 12-Hydroxystearinsäuresesquiester des Pentaerythrits, Dipentaerythrits und Mannits. Als Mitglied dieser Gruppe wird auch gehärtetes Ricinusöl aufgefaßt, das bekanntlich ein Triglyceridgemisch mit einem hauptsächlich aus 12-Hydroxystearinsäure bestehenden Fettsäureanteil darstellt. Bei den 12-Hydroxystearinsäureestern der zweiten Art handelt es sich um Veresterungsprodukte aus 12-Hydroxystearinsäure und Fettsäuren mit 8 bis 24 C-Atomen, welch letztere bereits weiter oben näher beschrieben sind. Aus dieser Gruppe von 12-Hydroxystearinsäurederivaten kommt dem Veresterungsprodukt aus 12-Hydroxystearinsäure und Behensäure besondere Bedeutung zu, da es die charakteristische Eigenschaft besitzt, die Pigmentpartikel in Kunststoffschmelzen so gut zu dispergieren, daß bei seiner Verwendung die üblichen Einsatzmengen der Pigmente um bis zu 10 % reduziert werden können. Außerdem hat dieses Veresterungsprodukt mit 60 °C einen so günstigen Schmelzpunkt, daß das Einmischen der Pigmente bei niederen Temperaturen erfolgen kann, so daß keine Beeinträchtigung der Eigenschaften der Farbpigmente eintritt. Auf der anderen Seite liegt der Schmelzpunkt hoch genug, um eine Lagerung der geformten Pigmentzusammensetzungen ohne Zusammenbacken oder Ausschwitzerscheinungen auch bei Sommertemperaturen zu ermöglichen.

Die erfindungsgemäßen Farbpigmentzusammensetzungen liegen entsprechend dem Herstellungsverfahren, das nachfolgend beschrieben wird, in Form von Pastillen vor, die einen Durchmesser von 1 bis 20 mm haben. Bevorzugt weisen die Pastillen einen Durchmesser von 3 bis 10 mm auf. Gegenüber dem Stand der Technik sind die Farbpigmentpastillen insofern besonders vorteilhaft, als sie bruchfest, gut silierbar, pneumatisch förderbar und volumetrisch dosierbar sind. Sie lassen sich außerdem problemlos im festen Kunststoffgranulat, insbesondere in festem PVC-Granulat, dispergieren. Dabei tritt absolut kein Farbpigmentstaub auf.

Die staubfreien Farbpigmentzusammensetzungen werden erfindungsgemäß auf folgendem Wege hergestellt: In die Schmelze eines oder mehrerer bei 25°C fester Kunststoff-Verarbeitungshilfsmittel, die die oben genannten Anforderungen zu erfüllen haben, werden sukzessive bis zu 99 Gew.-% eines oder mehrerer fester oder flüssiger Farbstoffe oder Pigmente eingetragen. Die genauen Mengenverhältnisse sind dabei stark vom Kunststoff-Verarbeitungshilfsmittel sowie vom jeweiligen Pigment abhängig. Bevorzugt werden Pigmentmengen im Bereich von 40 bis 85 Gew.-%, bezogen auf das Gewicht der Gesamtmischung, verwendet. Die Erfindung ist jedoch auf diese Bereiche nicht beschränkt; einzige Anforderung ist, daß mit Hilfe der Zusammensetzung druckstabile Pastillen hergestellt werden können. Der Vorgang des Eintragens der Farbstoffe in die Schmelze kann nach an sich bekannten Methoden durchgeführt werden. Bevorzugt wird dazu ein herkömmliches beheizbares Rührgefäß mit einem Industrie-Rührwerk verwendet.

Gegebenenfalls werden in einem nachfolgenden Verfahrensschritt grobe feste Pigmentanteile in dem geschmolzenen Kunststoff-Verarbeitungshilfsmittel einem Naßmahlprozeß unterworfen. Dabei wird bei geringem Energieaufwand eine größere Feinheit der Farbpigmentpartikel erreicht. Gegenüber den bisherigen Verfahren ist dabei insofern ein Vorteil zu erzielen, als die Farbpigmente in gröberer, d.h. nichtstaubender Form eingesetzt werden können und trotzdem im Verlaufe des Naßmahlprozesses so fein gemahlen werden, daß eine hervorragende Färbung des Farbstoffs, beispielsweise des Polyvinylchlorid-Polymeren, erreicht wird.

Die entstandene Suspension aus Kunststoff-Verarbeitungshilfsmittel und Farbpigment bzw. Farbstoff wird auf eine Fläche getropft, deren Temperatur unterhalb des Schmelzpunktes des Kunststoff-Verarbeitungshilfsmittels abgekühlt ist. Dazu wird die einheitliche Suspension beispielsweise mittels einer Zahnradpumpe zu einem handelsüblichen Tropfenformer gefördert, welcher über einem umlaufenden, mit Wasser von unten gekühlten Stahlband angeordnet ist. Die geschmolzenen Suspensionstropfen treffen auf das gekühlte Blech auf und erstarren dabei zu Pastillen mit einem Durchmesser von 1 bis 20 mm, bevorzugt von 3 bis 10 mm Durchmesser. Mit Hilfe dieses Stahlbandes werden die Pastillen von der Auftropfstelle wegtransportiert und fallen an einer Umlenkung des Stahlbandes von diesem in einen dafür geeigneten Behälter ab. In diesem können sie zwischengelagert werden oder unmittelbar der Kunststoffverarbeitung, beispielsweise der Färbung des Kunststoffs, zugeführt werden. Bei einer Lagerung bei erhöhten Temperaturen klumpen die erfindungsgemäß in Pastillenform vorliegenden staubfreien Farbpigmentzusammensetzungen nicht zusammen, sondern liegen als Einzelpastillen vor, die jederzeit wieder dem Verarbeitungsprozeß zugeführt werden können, volumetrisch dosierbar sind und sich vor allem ausgezeichnet im festen Kunststoffgranulat dispergieren lassen. Im gesamten Prozeß der Herstellung der staubfreien Farbpigmentzusammensetzungen gemäß der vorliegenden Erfindung tritt absolut kein Staub auf. Die Erfordernisse der Staubfreiheit am Arbeitsplatz lassen sich damit ohne Schwierigkeiten erfüllen.

Mit Hilfe der erfindungsgemäßen Farbpigmentzusammensetzungen in Pastillenform, die einen Farbstoffanteil bis zu 99 Gew.-% aufweisen können, wird noch ein weiterer Vorteil erzielt: Über die Mengen an Komponenten, die bei der Herstellung eingesetzt werden, lassen sich die Mengen an Kunststoff-Verarbeitungshilfsmittel und Farbpigment getrennt einstellen, ohne daß bei vorgegebener Hilfsmittel-Menge für die Kunststoffverarbeitung - Farbstoff nachdosiert werden muß und damit die Gefahr der Bildung von Pigmentstaub erneut besteht.

Die Erfindung wird durch die nachfolgenden Beispiele näher erläutert.

Beispiele

Beispiel 1

In einem beheizbaren 50 l-Rührgefäß wurden 18,8 kg eines Veresterungsproduktes aus 12-Hydroxystearinsäure und Behensäure aufgeschmolzen. Bei 80°C wurden portionsweise 43,9 kg Braunpigment (Mischung aus Eisenoxid und Chromgelb) zugegeben und gerührt, bis eine einheitliche Suspension entstanden war. Diese wurde mittels einer Zahnradpumpe zu einem handelsüblichen Tropfenformer gefördert, welcher über einem umlaufenden, mit Wasser von unten gekühlten Stahlband angeordnet war. Die Tropfen erstarrten bei Auftreffen auf dem gekühlten Stahlband zu Pastillen von 3 bis 5 mm Durchmesser. Diese fielen an der Umlenkung des Stahlbandes ohne Brechen von diesem ab und konnten so in einem Behälter gesammelt und verpackt werde. Es entstand absolut kein Staub.

Beispiel 2

Analog Beispiel 1 wurde durch Eintragen von 43,5 kg Eisenoxidrot in 16,5 kg technische Stearinsäure (in Gewichtsprozent: gesättigt: 1 % $C_{12}$; 1 % $C_{15}$; 45 % $C_{16}$; 2 % $C_{17}$; 47 % $C_{18}$; einfach ungesättigt: 1 % $C_{18}$) bei 80 °C und anschließendes Pastillieren eine erfindungsgemäße Farbpigmentzusammensetzung erhalten, die sich zum Färben von PVC-Formmassen für das Extrusionsverfahren eignet.

Beispiel 3

Analog Beispiel 1 wurden 17,6 kg Behenylakohol auf 80 °C erhitzt und 44,7 kg Chromgelb eingetragen. Die Suspension wurde wie beschrieben zu Pastillen verarbeitet. Die erhaltene Farbpigmentzusammensetzung eignet sich zum Färben von PVC-Formmassen, die für die Herstellung von Drainagerohren nach dem Extrusionsverfahren bestimmt sind.

## Beispiel 4

19,8 kg Stearylstearat und 41,2 kg Graupigment (94 Gew.-% Titandioxid und 6 Gew.-% Ruß) wurden analog Beispiel 1 zu einer Farbpigmentzusammensetzung in Pastillenform verarbeitet. Diese Farbpigmentzusammensetzung kann in PVC-Massen zur Herstellung von Elektroinstallationsrohren nach dem Extrusionsverfahren und in PVC-Spritzgußmassen eingesetzt werden.

## Beispiel 5

Durch Eintragen von 43,3 kg Braunpigment (Mischung aus Eisenoxid und Chromgelb) in 18,8 kg geschmolzenes, gehärtetes Ricinusöl bei 80 °C und anschließendes Pastillieren analog Beispiel 1 wurde eine erfindungsgemäße Farbpigmentzusammensetzung erhalten, die sich zum Färben von PVC-Formmassen für das Extrusionsverfahren eignet.

## Beispiel 6

·Analog Beispiel 1 wurden 24 kg eines Stearinsäurepartialesters des Pentaerythrits (Molverhältnis 3,5 : 1) auf 80 °C erhitzt, 37 kg Phthalocyaninblau darin suspendiert und die erhaltene Mischung zu Pastillen verarbeitet. Die erhaltene Farbpigmentzusammensetzung eignet sich zur Verwendung in PVC-Formmassen, die nach dem Extrusionsverfahren verarbeitet werden sollen.

## Beispiel 7

Durch mechanisches Vermischen der Bestandteile wurde eine PVC-Formmasse folgender Zusammensetzung hergestellt (GT = Gewichtsteile):

100 GT    Suspensions-PVC (K-Wert 65-68),
1,8 GT    einer Stabilisatormischung auf Basis von Bleistearat
0,2 GT    Farbpigmentzusammensetzung nach Beispiel 1.

Die verwendete Stabilisatormischung hatte die Zusammensetzung

39 GT    neutrales Bleistearat,
39 GT    2-basisches Bleistearat,
14 GT    Paraffin (Smp. ca. 70 °C),
5 GT    Stearinsäurepartialester des Pentaerythrits (Molverhältnis 1,8 : 1),
2,5 GT    Bisphenol A.

Als Vergleichszusammensetzung diente eine PVC-Formmasse der oben angegebenen Rezeptur, in die anstelle von 0,2 GT Farbpigmentzusammensetzung nach Beispiel 1 nur 0,14 GT Braunpigment ohne Zusatz eingearbeitet worden war.

Aus beiden Formmassen wurden über einen Doppelschneckenextruder bei einer PVC-Massetemperatur von 190 °C Rohre hergestellt. Dabei wurde festgestellt, daß der mit der erfindungsgemäßen Farbpigmentzusammensetzung eingebrachte zusätzliche Gleitmittelanteil (0,06 Gew.-%, bezogen auf die gesamte Formmasse, die rheologischen Eigenschaften der Formmasse nicht beeinträchtigt.

## Beispiel 8

Durch mechanisches Vermischen der Bestandteile wurde eine PVC-Formmasse folgender Zusammensetzung hergestellt:

100 GT    Suspensions-PVC (K-Wert 58),
4,1 GT    einer Stabilisatormischung auf Basis von Bleisulfat,
0,4 GT    Farbpigmentzusammensetzung nach Beispiel 5.

Die hier eingesetzte Stabilisatormischung hatte die Zusammensetzung

60 GT    3-basisches Bleisulfat,
18,8 GT    Calciumstearat,
16,5 GT    Glycerindistearat,
3,5 GT    Laurinsäure,
1,1 GT    Stearinsäure.

Als Vergleichszusammensetzung wurde eine Formmasse der oben angegebenen Rezeptur hergestellt, die anstelle von 0,4 GT Farbpigmentzusammensetzung nach Beispiel 5 nur 0,28 GT Braunpigment ohne Zusatz enthielt.

Aus beiden Formmassen wurden über eine Spritzgußapparatur bei einer PVC-Massetemperatur von 210 bis 215 °C Spritzgußfittings hergestellt. Dabei konnte gezeigt werden, daß der mit der erfindungsgemäßen Farbpigment zusammensetzung eingebrachte zusätzliche Gleitmittelanteil (ca. 0,12 Gew.-%, bezogen auf das Kunstharz) die rheologischen Eigenschaften der PVC-Formmasse nicht beeinträchtigt. In beiden Fällen wurden einwandfreie, vollständig eingefärbte Fittings mit guter Farbbeständigkeit erhalten.

Beispiel 9

Die in Beispiel 8 beschriebene, mit der erfindungsgemäßen Farbpigmentzusammensetzung eingefärbte PVC-Formmasse wurde zur Herstellung von braun gefärbten Rohren mit einem Durchmesser von 30 mm und einer Wandstärke von 1,5 mm eingesetzt. Als Vergleichszusammensetzung wurde eine PVC-Formmasse gemäß der im Beispiel 8 angegebenen Rezeptur, jedoch ohne Zusatz der Farbpigmentzusammensetzung geprüft. Die Verarbeitung erfolgte über einen handelsüblichen Doppelschneckenextruder. Die eingefärbte PVC-Formmasse zeigte dabei im Vergleich zur nichteingefärbten Rezeptur keinerlei Veränderung im rheologischen Verhalten, d.h. die eingefärbte PVC-Formmasse konnte unter denselben Bedingungen (PVC-Massentemperatur, PVC-Massedruck, Extruderkopftemperatur, Zylindertemperaturen und Ausstoßleistung) verarbeitet werden wie die nichteingefärbte Formmasse. Bei der visuellen Beurteilung der gefärbten Rohre wurden weder Pigmentstippen noch Schlieren festgestellt.

Beispiel 10

Zur Überprüfung der Dispergierbarkeit der erfindungsgemäßen Farbpigmentzusammensetzungen in Hart-PVC-Formmassen für den Spritzguß wurden die in Beispielen 7 und 8 beschriebenen mechanischen Gemische aus PVC, Stabilisatormischung und Pigmentpastillen in einem Heiz-/Kühlmischer (Hersteller Fa. Henschel) bei 90 °C heiß aufbereitet. Dabei wurden die Zusatzstoffe zerschlagen und auf der Oberfläche des PVC-Granulats abgelagert. 1 kg des erhaltenen PVC-dry blend wurde durch ein Sieb mit 710 um Maschenweite gesiebt. Dabei wurde kein Siebrückstand festgestellt. Demnach lassen sich die erfindungsgemäßen Farbpigmentzusammensetzungen einwandfrei in festem PVC dispergieren.

**Ansprüche**

1. Staubfreie Farbpigmentzusammensetzungen für das Färben von Kunststoffen auf der Basis von Mischungen von Farbstoffen und festen, - schmelzbaren Kunststoff-Verarbeitungshilfsmitteln, dadurch gekennzeichnet, daß sie

(a) einen oder mehrere feste Farbstoffe oder Pigmente in einer Menge von bis zu 99 Gew.-%, bezogen auf das Gewicht der Gesamtmischung, und

(b) ein oder mehrere bei 25°C feste Kunststoff-Verarbeitungshilfsmittel, die einen Schmelzpunkt unter dem Zersetzungspunkt der Farbstoffe oder Pigmente aufweisen und sowohl mit den Farbstoffen und/oder Pigmenten als auch mit den Kunststoffen verträglich sind, enthalten und

(c) in Form von Pastillen mit einem Durchmesser von 1 bis 20 mm vorliegen.

2. Farbpigmentzusammensetzungen nach Anspruch 1, dadurch gekennzeichnet, daß sie ein oder mehrere pulverförmige Farbpigmente enthalten.

3. Farbpigmentzusammensetzungen nach Ansprüchen 1 und 2, dadurch gekennzeichnet, daß sie Farbstoffe und/oder Pigmente in einer Menge von 40 bis 85 Gew.-%, bezogen auf das Gewicht der Gesamtmischung, enthalten.

4. Farbpigmentzusammensetzungen nach Ansprüchen 1 bis 3, dadurch gekennzeichnet, daß sie ein oder mehrere Kunststoff-Verarbeitungshilfsmittel aus der Gruppe Stabilisatoren, Weichmacher und Gleitmittel enthalten.

5. Farbpigmentzusammensetzungen nach Anspruch 4, dadurch gekennzeichnet, daß sie als Kunststoff-Verarbeitungshilfsmittel ein Gleitmittel für die Kunststoffverarbeitung enthalten.

6. Farbpigmentzusammensetzungen nach Anspruch 5, dadurch gekennzeichnet, daß sie ein Gleitmittel aus der aus Fettsäuren mit 8 bis 24 C-Atomen, Fettalkoholen mit 12 bis 24 C-Atomen, Estern aus Fettsäuren mit 8 bis bis 24 C-Atomen und Fettalkoholen mit 6 bis 24 C-Atomen, Estern aus Fettsäuren mit 24 C-Atomen und mehrwertigen Alkoholen mit 4 bis 6 Hydroxylgruppen und Hydroxystearinsäureestern bestehenden Gruppe enthalten.

7. Farbpigmentzusammensetzungen nach Anspruch 6, dadurch gekennzeichnet, daß sie als Gleitmittel ein Veresterungsprodukt aus Hydroxystearinsäure und Behensäure enthalten.

8. Farbpigmentzusammensetzungen nach Ansprüchen 1 bis 7, dadurch gekennzeichnet, daß sie in Form von Pastillen mit einem Durchmesser von 3 bis 10 mm vorliegen.

9. Verfahren zur Herstellung von staubfreien Farbpigmentzusammensetzungen für das Färben von Kunststoffen auf der Basis von Mischungen von Farbstoffen und festen, schmelzbaren Kunststoff-Verarbeitungshilfsmitteln, dadurch gekennzeichnet, daß man

(a) in die Schmelze eines oder mehrerer bei 25°C fester Kunststoff-Verarbeitungshilfsmittel, die einen Schmelzpunkt unter dem Zersetzungspunkt der Farbstoffe oder Pigmente aufweisen und sowohl mit den Farbstoffen und/oder Pigmenten als auch mit den Kunststoffen verträglich sind, bis zu 99 Gew.-%, bezogen auf das Gewicht der Gesamtmischung, einen oder mehrere feste Farbstoffe oder Pigmente einträgt,

(b) gegebenenfalls grobe feste Pigmentanteile in dem geschmolzenen Kunststoff-Verarbeitungshilfsmittel einem Naßmahlprozeß unterwirft,

(c) die entstandene einheitliche Suspension auf eine Temperatur unterhalb des Schmelzpunktes des Kunststoff-Verarbeitungshilfsmittels gekühlte Fläche tropft und

(d) die dabei entstandenen Pastillen von der gekühlten Fläche ablöst und anschließend lagert oder unmittelbar der Kunststoffverarbeitung zuführt.

10. Verfahren nach Anspruch 9, dadurch gekennzeichnet, daß man in die Schmelze des Kunststoff-Verarbeitungshilfsmittels 40 bis 85 Gew.-%, bezogen auf das Gewicht der Gesamtmischung, eines oder mehrerer fester oder flüssiger Farbstoffe oder Pigmente einträgt.

11. Verfahren nach Ansprüchen 9 bis 10, dadurch gekennzeichnet, daß man die einheitliche Suspension auf ein mit Wasser gekühltes Stahlband tropft und an der Umlenkstelle des Stahlbandes die gebildeten Pastillen bruchfrei ablöst.